# EUROPEAN PATENT APPLICATION

(11) **EP 2 757 489 A1**
(43) Date of publication of application: **23.07.2014**
(21) Application number: 12830968.9
(22) Date of filing: 13.08.2012
(51) Int. Cl.: G06F 17/30

(54) **DATA MATCHING METHOD AND DEVICE**

(30) Priority: 13.09.2011 CN 201110270246
(71) Applicant: Tencent Technology (Shenzhen) Company Limited, Shenzhen, Guangdon 518044 (CN)
(72) Inventor: ZHANG, Jian, Shenzhen Guangdong 518044 (CN); FAN, Yu, Shenzhen Guangdong 518044 (CN); JIN, Weijian, Shenzhen Guangdong 518044 (CN); ZHAO, Lin, Shenzhen Guangdong 518044 (CN)
(74) Representative: Jansen, Cornelis Marinus
(86) International application number: PCT/CN2012/080017
(87) International publication number: WO 2013/037256

(57) **Abstract**

Provided is a data matching method and device. The method includes: marking each micro-blog user in a first category of micro-blog users according to characteristic information and category of the micro-blog user; obtaining characteristic information and category of a second micro-blog user; and selecting a micro-blog user matching the characteristic information and category of the second micro-blog user from the first category of micro-blog users and recommending the selected micro-blog user to the second micro-blog user. By the method and device, a message source interesting the user may be recommended.

## Description

This application claims the benefit of priority from Chinese Patent Application, No. 201110270246.7, entitled "information matching method and device" and filed on September 13, 2011, the entire content of which is hereby incorporated by reference.

### Technical Field

The present disclosure relates to Internet technologies, and more particularly to a data matching method and device.

### Background

With the development of Internet technologies, micro-blog technology is advanced rapidly in China. At present, the number of users subscribed to a certain micro-blog application has exceeded ten million. Correspondingly, the number of micro-blog messages sent by users has exceeded ten million.

After starting a micro-blog application, a user should select interesting contents from vast amounts of data through a certain mode to read the selected contents. Otherwise, the vast amounts of data may puzzle the user. At present, there are two common selecting modes, including a user-based index mode and a content-based index mode. By the user-based index mode, all messages posted by a certain user or by some users may be obtained. The user-based index mode is a main way for obtaining messages. By the content-based index mode, a certain user or some users posting messages related to the content may be obtained, and then all messages posted by the user or users may be obtained.

However, the above two modes are unhelpful for a user to find a message source suitable for the user from throng users or to find an interesting user rapidly. Accordingly, a to-be-solved problem is how to find the message source suitable for the user from throng users.

With the development of micro-blog technologies, a method called a celebrity recommending method is provided. The celebrity recommending method is implemented as follows. Some celebrities are randomly selected and recommended to a common micro-blog user logging on a micro-blog application. A celebrity refers to a user whose true identity has been authenticated and has a certain impact. When a celebrity posts a micro-blog message, it is indicated that the celebrity issues a public speech. The true identity of common micro-blog user does not need to be authenticated.

In the celebrity recommending method, the celebrities are selected randomly. However, a user may be uninterested in the randomly selected celebrities, and thus the method cannot provide users interesting the user.

### Summary

Examples of the present disclosure provide a data matching method and device, so as to recommend a message source interesting a user.

The solution of the present disclosure is implemented as follows.

A data matching method includes:
marking each micro-blog user in a first category of micro-blog users according to characteristic information and category of the micro-blog user;
obtaining characteristic information and category of a second micro-blog user; and
selecting a micro-blog user matching the characteristic information and category of the second micro-blog user from the first category of micro-blog users and recommending the selected micro-blog user to the second micro-blog user.

A data matching device includes:
a marking unit, configured to mark each micro-blog user in a first category of micro-blog users according to characteristic information and category of the micro-blog user;
an obtaining unit, configured to obtain characteristic information and category of a second micro-blog user; and
a recommending unit, configured to select a micro-blog user matching the characteristic information and category of the second micro-blog user from the first category of micro-blog users and recommend the selected micro-blog user to the second micro-blog user.

As can be seen from the solution of the present disclosure, each micro-blog user in the first category of micro-blog users is marked according to the characteristic information and category of the micro-blog user, and the characteristic information and category of the second micro-blog user logging on a micro-blog application are obtained. The micro-blog user matching the obtained characteristic information and category of the second micro-blog user is selected from the first category of micro-blog users and is recommended to the second micro-blog user. The solution is different from the conventional celebrity recommending method, and thus may recommend a message source interesting the user.

### Brief Description of the Drawings

Fig. 1 is a schematic flowchart illustrating a data matching method according to an example of the present disclosure.
Fig. 2 is a schematic flowchart illustrating a process of obtaining characteristic information of a second micro-blog user at block 101 according to an example of the present disclosure.
Fig. 3 is a schematic flowchart illustrating an implementation of block 102 according to an example of the present disclosure.
Fig. 4 is a schematic flowchart illustrating a process performed after recommending a micro-blog user according to an example of the present disclosure.
Fig. 5 is a schematic diagram illustrating the structure of a data matching device according to an example of the present disclosure.

### Detailed Description

In order to make the technical solution and merits of the present disclosure clearer, the present disclosure will be illustrated in detail hereinafter with reference to the accompanying drawings and specific examples.

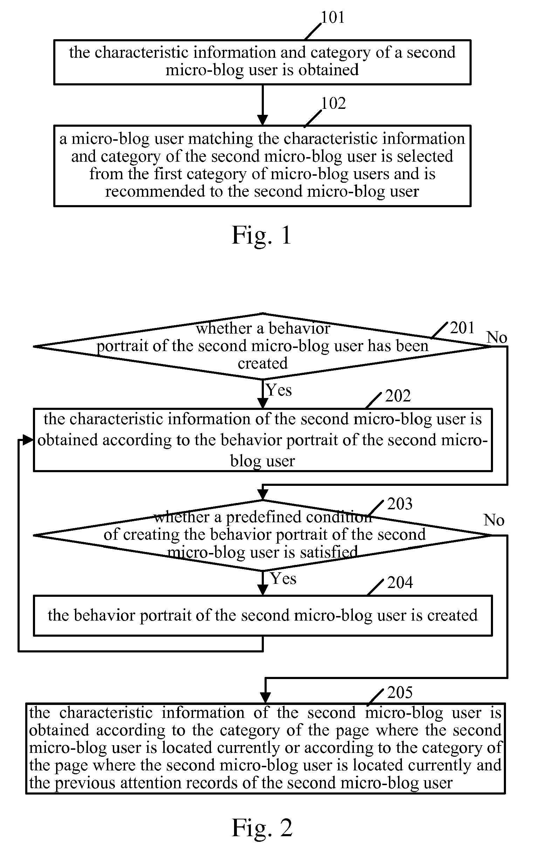

An example of the present disclosure provides a data matching method, referring to Fig. 1. Fig. 1 is a schematic flowchart illustrating a data matching method according to an example of the present disclosure. In the method, each micro-blog user in a first category of micro-blog users is marked. The first category of micro-blog users includes at least one micro-blog user whose true identity should be authenticated and has an impact. For example, the micro-blog user in the first category of micro-blog users may be a public figure having a certain impact in a real life, such as an entertainment star, a business manager and a government official.

The micro-blog user is marked according to following information.
1) The category of the micro-blog user is considered. The category of the micro-blog user may be contained in information submitted by the micro-blog user when the micro-blog user is authenticated. The category refers to an industry such as an entertainment industry, a sport industry and a news industry.
2) The characteristic information of the micro-blog user is also considered. The characteristic information of the micro-blog user may be called a personal tab, and may be determined according to the specific circumstances of the micro-blog user.

After the micro-blog user is marked, the method shown in Fig. 1 may be implemented as follows.

At block 101, the characteristic information and category of a second micro-blog user is obtained.

The true identity of the second micro-blog user does not need to be authenticated. Compared with the true identity of the micro-blog user in the first category of micro-blog users, the true identity of the second micro-blog user usually has no impact.

In an implementation of block 101, a process of obtaining the category of the second micro-blog user includes obtaining the category of a page where the second micro-blog user is located currently.

A process of obtaining the characteristic information of the second micro-blog user at block 101 is described with reference to the flowchart shown in Fig. 2.

At block 102, a micro-blog user matching the characteristic information and category of the second micro-blog user is selected from the first category of micro-blog users and is recommended to the second micro-blog user.

The foregoing is the flowchart shown in Fig. 1. Blocks 101 and 102 shown in Fig. 1 are described respectively hereinafter.

Fig. 2 is a schematic flowchart illustrating a process of obtaining the characteristic information of the second micro-blog user at block 101 according to an example of the present disclosure. As shown in Fig. 2, the process includes following blocks.

At block 201, it is determined whether a behavior portrait of the second micro-blog user has been created. If the behavior portrait of the second micro-blog user has been created, block 202 is performed. If the behavior portrait of the second micro-blog user has not been created, block 203 is performed.

The behavior portrait of the second micro-blog user is configured to record the characteristic information of the second micro-blog user. If the behavior portrait of the second micro-blog user has been created, it is easy to obtain the characteristic information of the second micro-blog user according to the behavior portrait of the second micro-blog user. It is should be noted that, a method for analyzing the behavior portrait of the second micro-blog user and a method for obtaining the characteristic information of the second micro-blog user according to the behavior portrait of the second micro-blog user are not described herein.

At block 202, the characteristic information of the second micro-blog user is obtained according to the behavior portrait of the second micro-blog user.

In an implementation, the obtained characteristic information of the second micro-blog user may be hobbies and attention of the second micro-blog user.

At block 203, it is determined whether a predefined condition of creating the behavior portrait of the second micro-blog user is satisfied. If the predefined condition is satisfied, block 204 is performed. If the predefined condition is not satisfied, block 205 is performed.

The predefined condition may be the number of previous attention records of the second micro-blog user. The previous attention records may be page accessing records and/or micro-blog writing records. When the number of previous attention records of the second micro-blog user reaches a predefined threshold, it is determined that the predefined condition is satisfied. Otherwise, it is determined that the predefined condition is not satisfied.

At block 204, the behavior portrait of the second micro-blog user is created, and block 202 is performed.

At block 205, the characteristic information of the second micro-blog user is obtained according to the category of the page where the second micro-blog user is located currently or according to the category of the page where the second micro-blog user is located currently and the previous attention records of the second micro-blog user.

In an implementation, block 205 may be replaced with a process of randomly selecting a micro-blog user from the first category of micro-blog users and recommending the selected micro-blog user to the second micro-blog user. The selected micro-blog user matches the previous attention records of the second micro-blog user and the category of the page where the second micro-blog user is located currently. As can be seen, if block 205 is replaced with this process, the characteristic information of the second micro-blog user may not be obtained again, but the micro-blog user in the first category of micro-blog users is selected directly and recommended to the second micro-blog user.

The foregoing is the flowchart shown in Fig. 2. By the flowchart, the characteristic information of the second micro-blog user may be obtained.

Block 102 shown in Fig. 1 is described hereinafter.

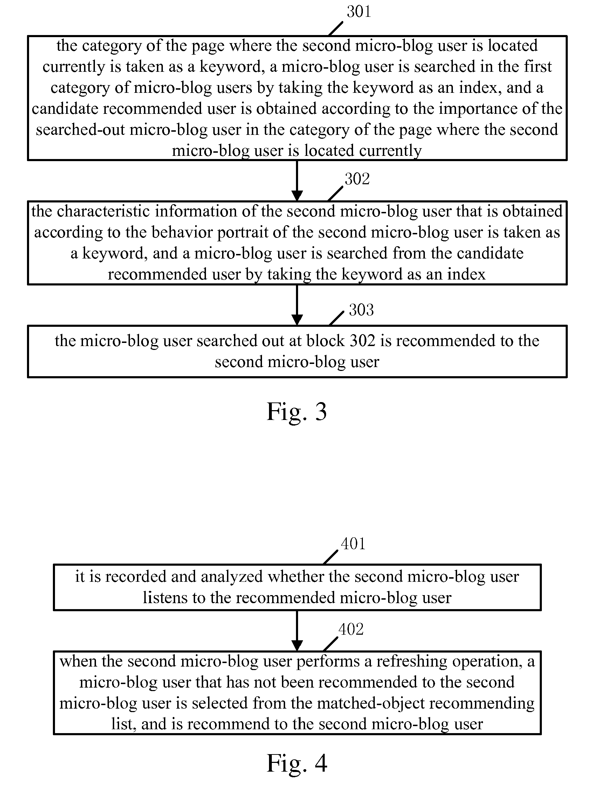

Fig. 3 is a schematic flowchart illustrating an implementation of block 102 according to an example of the present disclosure. As shown in Fig. 3, the characteristic information and category of each micro-blog user in the first category of micro-blog users may be used as an index of the micro-blog user. As shown in Fig. 3, the flowchart includes following blocks.

At block 301, the category of the page where the second micro-blog user is located currently is taken as a keyword, a micro-blog user is searched in the first category of micro-blog users by taking the keyword as an index, and a candidate recommended user is obtained according to the importance of the searched-out micro-blog user in the category of the page where the second micro-blog user is located currently.

In an implementation of block 301, the candidate recommended user may include all searched-out micro-blog users, or include N micro-blog users in all searched-out micro-blog users, wherein the N micro-blog users have higher importance than the other micro-blog users in the category where the second micro-blog user is located currently. The value of N is not limited herein. The importance of the micro-blog user in the category is described hereinafter.

At block 302, the characteristic information of the second micro-blog user that is obtained according to the behavior portrait of the second micro-blog user is taken as a keyword, and a micro-blog user is searched from the candidate recommended user by taking the keyword as an index.

At block 303, the micro-blog user searched out at block 302 is recommended to the second micro-blog user.

In an implementation of block 303, all micro-blog users searched out at block 302 or the micro-blog users that are searched out at block 302 and have higher importance in the category of the page where the second micro-blog user is located currently are taken as micro-blog users to be recommended to the second micro-blog user.

In an implementation, the micro-blog users to be recommended to the second micro-blog user may be recorded in a matched-object recommending list. Accordingly, a process of recommending the micro-blog user to the second micro-blog user at block 303 includes recommending a micro-blog user in the matched-object recommending list to the second micro-blog user.

In an implementation, the process of recommending the micro-blog user in the matched-object recommending list to the second micro-blog user includes filtering out a micro-blog user listened by the second micro-blog user from the matched-object recommending list, and recommending a remained micro-blog user to the second micro-blog user.

And thus, blocks 301-303 may recommend the micro-blog user interesting the second micro-blog user to the second micro-blog user.

After recommending the micro-blog user to the second micro-blog user, the flowchart shown in Fig. 4 may be performed. The flowchart includes following blocks.

At block 401, it is recorded and analyzed whether the second micro-blog user listens to the recommended micro-blog user.

At block 402, when the second micro-blog user performs a refreshing operation, a micro-blog user that has not been recommended to the second micro-blog user is selected from the matched-object recommending list, and is recommend to the second micro-blog user.

The foregoing is the flowchart shown in Fig. 4.

The flowchart shown in Figs. 1, 2, 3 and 4 are all performed by a server device or a background device. In Fig. 4, block 401 may further include sending an analyzing result to the server device or the background device, and the server device or the background device optimizes the matched-object recommending list. In an implementation of block 402, when the second micro-blog user performs the refreshing operation, the micro-blog user that has not been recommended to the second micro-blog user is selected from the matched-object recommending list, and is recommend to the second micro-blog user. In this way, matched objects in the matched-object recommending list may be filtered, thereby implementing a forward closed loop.

It should be noted that, a process of marking the micro-blog user in the first category of micro-blog users includes: marking the importance of the micro-blog user in the category of the micro-blog user. The importance of the micro-blog user in the category of the micro-blog user may be determined according to the number of all micro-blog users in the category. Accordingly, the process of recommending the micro-blog user to the second micro-blog user includes: recommending the micro-blog user to the second micro-blog user according to the importance of the micro-blog user in the category of the second micro-blog user.

The size of a page for recommending the micro-blog user is usually limited. In an implementation, when recommending the micro-blog user to the second micro-blog user according to the importance of the micro-blog user in the category of the second micro-blog user, the number of recommended micro-blog users should correspond to the size of the page. The remained micro-blog user that has not been recommended to the second micro-blog user may be recommended when a predefined period of time expires or the second micro-blog user performs the refreshing operation, thereby updating the micro-blog users that have been recommended to the second micro-blog user.

The foregoing is the data matching method provided according to the example of the present disclosure.

A data matching device is described hereinafter according to an example of the present disclose.

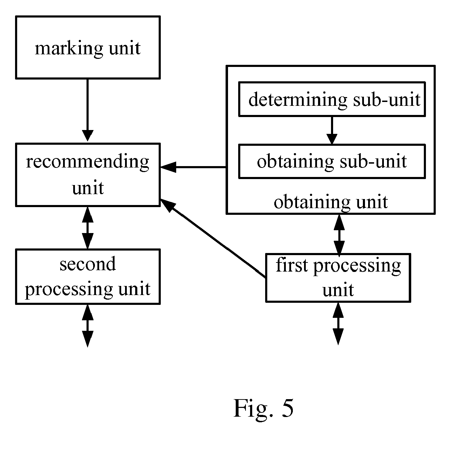

Fig. 5 is a schematic diagram illustrating the structure of a data matching device according to an example of the present disclosure. As shown in Fig. 5, the data matching device includes following units.

A marking unit is configured to mark each micro-blog user in a first category of micro-blog users according to the characteristic information and category of the micro-blog user. The first category of micro-blog users includes at least one micro-blog user whose true identity should be authenticated and has an impact.

An obtaining unit is configured to obtain the characteristic information and category of a second micro-blog user. The true identity of the second micro-blog user does not need to be authenticated.

A recommending unit is configured to select a micro-blog user matching the characteristic information and category of the second micro-blog user from the first category of micro-blog users and recommend the selected micro-blog user to the second micro-blog user.

In an implementation, as shown in Fig. 5, the obtaining unit includes following sub-units.

A determining sub-unit is configured to determine whether a behavior portrait of the second micro-blog user has been created. The behavior portrait of the second micro-blog user is configured to record the characteristic information of the second micro-blog user.

An obtaining sub-unit is configured to obtain the characteristic information of the second micro-blog user according to the behavior portrait of the second micro-blog user if the determining sub-unit determines that the behavior portrait of the second micro-blog user has been created.

The device further includes a first processing unit.

When the determining sub-unit determines that the behavior portrait of the second micro-blog user has not been created, the first processing unit is configured to trigger the obtaining sub-unit to obtain the characteristic information of the second micro-blog user according to the category of a page where the second micro-blog user is located currently or according to the category of the page where the second micro-blog user is located currently and the previous attention records of the second micro-blog user.

In another implementation, when the determining sub-unit determines that the behavior portrait of the second micro-blog user has not been created, the first processing unit is configured to trigger the recommending unit to randomly select a micro-blog user from the first category of micro-blog users and recommend the selected micro-blog user to the second micro-blog user. The selected micro-blog user matches the previous attention records of the second micro-blog user and the category of the page where the second micro-blog user is located currently.

A second processing unit is configured to record and analyze whether the second micro-blog user listens to the recommended micro-blog user, and when the second micro-blog user performs a refreshing operation, trigger the recommending unit to select a micro-blog user from micro-blog users that match the characteristic information and category of the second micro-blog user and have not been recommended to the second micro-blog user, and recommend the selected micro-blog user to the second micro-blog user.

In an implementation, the marking unit is further configured to mark the importance of the micro-blog user in the category of the micro-blog user. The importance of the micro-blog user in the category of the micro-blog user may be determined according to the number of all micro-blog users in the category.

Accordingly, the process of recommending the micro-blog user to the second micro-blog user by the recommending unit may include recommending the micro-blog user to the second micro-blog user according to the importance of the micro-blog user in the category of the second micro-blog user.

As can be seen from the solution of the present disclosure, each micro-blog user in the first category of micro-blog users is marked according to the characteristic information and category of the micro-blog user, and the characteristic information and category of the second micro-blog user logging on a micro-blog application are obtained. The micro-blog user matching the obtained characteristic information and category of the second micro-blog user is selected from the first category of micro-blog users and is recommended to the second micro-blog user. The solution is different from the conventional celebrity recommending method, and thus may recommend a message source interesting the user.

Further, through selecting the micro-blog user matching the characteristic information and category of the second micro-blog user from the first category of micro-blog users and recommending the selected micro-blog user to the second micro-blog user, the micro-blog user related to the second micro-blog user may be selected and recommended to the second micro-blog user, thereby providing a valuable message source. By the refreshing operation, more recommended micro-blog users may be presented, thereby obtaining a better effect.

Through filtering out the micro-blog user listened by the second micro-blog user from the micro-blog users that match the characteristic information and category of the second micro-blog user and recommending the remained micro-blog user to the second micro-blog user, the second micro-blog user may obtain large amount of information, thereby improving user experiences and competitiveness.

The foregoing is only preferred examples of the present disclosure and is not used to limit the protection scope of the present disclosure. Any modification, equivalent substitution and improvement without departing from the spirit and principle of the present disclosure are within the protection scope of the present disclosure.

## Claims

1. A data matching method, comprising:
marking each micro-blog user in a first category of micro-blog users according to characteristic information and category of the micro-blog user;
obtaining characteristic information and category of a second micro-blog user; and
selecting a micro-blog user matching the characteristic information and category of the second micro-blog user from the first category of micro-blog users and recommending the selected micro-blog user to the second micro-blog user.

2. The data matching method of claim 1, wherein the first category of micro-blog users comprises at least one micro-blog user whose true identity should be authenticated and has an impact; and
a true identity of the second micro-blog user does not need to be authenticated.

3. The data matching method of claim 1 or 2, wherein the selecting the micro-blog user matching the characteristic information and category of the second micro-blog user from the first category of micro-blog users and recommending the selected micro-blog user to the second micro-blog user comprises:
selecting the micro-blog user matching the characteristic information and category of the second micro-blog user from the first category of micro-blog users; and
filtering out a micro-blog user listened by the second micro-blog user from the selected micro-blog user, and recommending a remained micro-blog user to the second micro-blog user.

4. The data matching method of claim 1 or 2, wherein the obtaining the characteristic information and category of the second micro-blog user comprises:
determining whether a behavior portrait of the second micro-blog user has been created, wherein the behavior portrait of the second micro-blog user is configured to record the characteristic information of the second micro-blog user; and
obtaining the characteristic information of the second micro-blog user according to the behavior portrait of the second micro-blog user if the behavior portrait of the second micro-blog user has been created.

5. The data matching method of claim 4, if the behavior portrait of the second micro-blog user has not been created, further comprising:
obtaining the characteristic information of the second micro-blog user according to the category of a page where the second micro-blog user is located currently or according to the category of the page where the second micro-blog user is located currently and a previous attention record of the second micro-blog user; or
randomly selecting the micro-blog user from the first category of micro-blog users and recommending the selected micro-blog user to the second micro-blog user, wherein the selected micro-blog user matches the previous attention record of the second micro-blog user and the category of the page where the second micro-blog user is located currently.

6. The data matching method of claim 5, further comprising:
creating the behavior portrait of the second micro-blog user when a predefined condition of creating the behavior portrait of the second micro-blog user is satisfied.

7. The data matching method of claim 1 or 2, further comprising:
recording and analyzing whether the recommended micro-blog user is listened by the second micro-blog user; and
when the second micro-blog user performs a refreshing operation, selecting a micro-blog user from the micro-blog user that matches the characteristic information and category of the second micro-blog user and has not been recommended to the second micro-blog user, and recommending the selected micro-blog user to the second micro-blog user.

8. The data matching method of claim 7, wherein the marking the micro-blog user in the first category of micro-blog users comprises: marking importance of the micro-blog user in the category of the micro-blog user, and the importance of the micro-blog user in the category of the micro-blog user may be determined according to the number of all micro-blog users in the category; and
the recommending the micro-blog user to the second micro-blog user comprises: recommending the micro-blog user to the second micro-blog user according to the importance of the micro-blog user in the category of the second micro-blog user.

9. The data matching method of claim 8, wherein the recommending the micro-blog user to the second micro-blog user according to the importance of the micro-blog user in the category of the second micro-blog user comprises:
recommending the micro-blog user to the second micro-blog user according to the importance of the micro-blog user in the category of the second micro-blog user, and the number of recommended micro-blog users corresponds to the size of a recommending page.

10. A data matching device, comprising:
a marking unit, configured to mark each micro-blog user in a first category of micro-blog users according to characteristic information and category of the micro-blog user;
an obtaining unit, configured to obtain characteristic information and category of a second micro-blog user; and
a recommending unit, configured to select a micro-blog user matching the characteristic information and category of the second micro-blog user from the first category of micro-blog users and recommend the selected micro-blog user to the second micro-blog user.

11. The data matching device of claim 10, wherein the first category of micro-blog users comprises at least one micro-blog user whose true identity should be authenticated and has an impact; and
a true identity of the second micro-blog user does not need to be authenticated.

12. The data matching device of claim 10 or 11, wherein the obtaining unit comprises:
a determining sub-unit, configured to determine whether a behavior portrait of the second micro-blog user has been created, wherein the behavior portrait of the second micro-blog user is configured to record the characteristic information of the second micro-blog user; and
an obtaining sub-unit, configured to obtain the characteristic information of the second micro-blog user according to the behavior portrait of the second micro-blog user if the determining sub-unit determines that the behavior portrait of the second micro-blog user has been created.

13. The data matching device of claim 12, further comprising:
a first processing unit, configured to, when the determining sub-unit determines that the behavior portrait of the second micro-blog user has not been created, trigger the obtaining sub-unit to obtain the characteristic information of the second micro-blog user according to the category of a page where the second micro-blog user is located currently or according to the category of the page where the second micro-blog user is located currently and the previous attention records of the second micro-blog user; or
configured to, when the determining sub-unit determines that the behavior portrait of the second micro-blog user has not been created, trigger the recommending unit to randomly select a micro-blog user from the first category of micro-blog users and recommend the selected micro-blog user to the second micro-blog user, wherein the selected micro-blog user matches the previous attention records of the second micro-blog user and the category of the page where the second micro-blog user is located currently; and
a second processing unit, configured to record and analyze whether the second micro-blog user listens to the recommended micro-blog user, when the second micro-blog user performs a refreshing operation, trigger the recommending unit to select a micro-blog user from micro-blog users that match the characteristic information and category of the second micro-blog user and have not been recommended to the second micro-blog user, and recommend the selected micro-blog user to the second micro-blog user.

14. The data matching device of claim 10 or 12, wherein the marking unit is further configured to mark importance of the micro-blog user in the category of the micro-blog user, the importance of the micro-blog user in the category of the micro-blog user may be determined according to the number of all micro-blog users in the category; and
the recommending unit is configured to recommend the micro-blog user to the second micro-blog user according to the importance of the micro-blog user in the category of the second micro-blog user.
